# EUROPEAN PATENT APPLICATION

(11) **EP 1 083 155 A1**
(43) Date of publication of application: **14.03.2001**
(21) Application number: 00402467.5
(22) Date of filing: 07.09.2000
(51) Int. Cl.: C03C 8/04

(54) **Method of manufacturing frit for ceramic glaze**

(30) Priority: 08.09.1999 JP 25396099
(71) Applicant: FERRO ENAMELS (JAPAN) LIMITED, Osaka-shi, Osaka 531-8526 (JP)
(72) Inventor: Toryu, Kouji, Ferro Enamels (Japan) Ltd,, Komaki-shi, Aichi 458-0081 (JP); Kariya, Kazuhiko, Komaki-shi, Aichi 458-0081 (JP)
(74) Representative: Peaucelle, Chantal

(57) **Abstract**

The present invention provides a method of manufacturing a frit achieving the surface of ceramics which has high fine texture and brightness and is hardly stained. In accordance with a method of the present invention, materials are mixed so as to make SiO₂ 55% or more, Al₂O₃ 5% or more (in which the total amount of SiO₂ and Al₂O₃ being made 60-85%), alkaline earth metal oxide(s) 2-20%, ZnO 2-15%, alkaline metal oxide(s) 2-7%, B₂O₃ 0-5%, TiO₂ and/or ZrO₂ 0-4% and MoO₃ 0-3% in terms of the ratio by weight of the oxides. The resulting mixture is melted at 1450-1650°C. The molten substance is quickly cooled at a cooling rate of 600-1500°C/second.

## Description

### Background of the Invention

The present invention relates to a method of manufacturing of a frit forming the surface of ceramics which has smoothness, fine texture and brightness and is stain-proof and also to a method of manufacturing ceramics using a glaze where the above-mentioned frit is used as a base.

Today, many ceramic products such as Japanese and western tableware as well as ornaments, tiles, washing bowls, glazed roof tiles, sanitary ware, cooking devices and craftworks have been deeply rooted in our daily life and widely used everywhere. However, it often happens that, in the case of tableware, cooking devices and sanitary ware, they are apt to be stained during the use for a long period and, at last, the dirt cannot be removed.

Up to now, trials have been carried out with an attempt that the surface of ceramics is hardly stained or that the adhered dirt is easily removed but there have been no effective means yet.

One of the causes for the adherence of dirt on the surface of ceramics is believed to be that the dirt adheres to small pits, pinholes, pigskin, etc. existing on the surface of ceramics and is not completely removed even by washing whereby the dirt builds up little by little and, finally, the dirt becomes difficult to be removed by means of washing.

There is a proposal of the product in which antibacterial agent is added to a glaze so that an antibacterial action is given to the surface of the ceramics whereby the dirt hardly adheres onto the surface of ceramics. However, there is no direct relation between the antibacterial action and the hard adherence of dirt as well as the easy removal of the dirt. In the meanwhile, a method of applying a photocatalytic hydrophilic coating on the surface of ceramic products as proposed by the Japanese Patent No. 2,756,474 is believed to be quite effective but, in the method, a hydrophilic coating is to be separately applied by an additional step onto the surface of the pre-fired product and there is a disadvantage that processing steps have to increase and the cost has to become higher.

When the adhered dirt is removed by a detergent or the like, the glaze surface is eroded by some types of detergent and, therefore, most of the glaze compositions which have been studied up to now are to specify the glaze compositions for preventing the above. However, even if a glaze composition which is resistant to detergents is specified, such a specific composition does not result in the effect that the dirt is hardly adhered or the adhered dirt is easily removed in the case of ceramic products which are used as constructive materials such as glazed roof tiles, sanitary ware and tiles.

### Summary of the Invention

Under such circumstances, the present inventors paid their attention that, if the surface of ceramics has a high degree of smoothness, fine texture and brightness with no small pit, pinhole and pigskin, the dirt hardly adheres thereon and, even when stained, that can be easily removed. The present inventors hereof have found such a surface of ceramics can be achieved when a highly viscous frit manufactured under a specific condition is used as a glaze whereupon the present invention has been accomplished.

Thus, the present invention relates to a method of manufacturing a frit for ceramic glaze, characterized in that materials are mixed so as to make SiO₂ 55% or more, Al₂O₃ 5% or more (in which the total amount of SiO₂ and Al₂O₃ being made 60-85%), alkaline earth metal oxide(s) 2-20%, ZnO 2-15%, alkaline metal oxide(s) 2-7%, B₂O₃ 0-5%, TiO₂ and/or ZrO₂ 0-4% and MoO₃ 0-3% in terms of the ratio by weight of the oxides, then the resulting mixture is melted at 1450-1650°C and the molten substance is rapidly cooled(quenched) at a cooling(quenching) rate of 600-1500°C/second.

### Brief Description of the Drawings

Fig. 1 is a graph showing the result of the measurement of the surface roughness of test pieces (specimens) of the tile where a frit E was used.

Fig. 2 is a graph showing the result of the measurement of the surface roughness of specimens of the tile where a frit L was used.

Fig. 3 is a graph showing the result of the measurement of the surface roughness of specimens of the sanitary ware where a frit R was used.

Fig. 4 is a graph showing the result of the measurement of the surface roughness of specimens of the sanitary ware where a frit W was used.

### Detailed Description of the Invention

In accordance with a manufacturing method of the present invention, a frit in which SiO₂ is 55% or more, Al₂O₃ is 5% or more (in which the total amount of SiO₂ and Al₂O₃ being 60-85%), alkaline earth metal oxide(s) is/are 2-20%, ZnO is 2-15%, alkaline metal oxide(s) is/are 2-7%, B₂O₃ is 0-5%, TiO₂ and/or ZrO₂ are/is 0-4% and MoO₃ is 0-3% in terms of weight is prepared. With regard to the alkaline earth metal oxide(s), MgO, CaO, SrO, BaO, etc. can be used either solely or in a combination of two or more thereof.

With regard to the alkaline metal oxide(s), Li₂O, Na₂O, K₂O, etc. can be used either solely or in a combination of two or more thereof.

Now, the function of the constituting components of the frit of the present invention and the reason for limitation of the weight ratio thereof will be described as follows.

In the frit of the present invention, SiO₂ and Al₂O₃ are the fundamental components which are network former of the glass matrix. The reason for the limitation why SiO₂ is 55% or more, Al₂O₃ is 5% or more and their total amount is 60-85% is that, as a result thereof, the viscosity of the glaze upon firing is high, so bubbles do not remain in the glaze layer that can suppress the development of pigskin and pinhole, when ceramic products are glazed using the glaze containing the above-mentioned frit. When the above total amount exceeds 85%, melt at the temperature of 1650°C or lower becomes quite difficult in the manufacture of the frit.

The alkaline earth metal oxide is the component that improves the smoothness of the glaze layer and affects the transparency and the gloss. The reason why the ratio by weight of the alkaline earth metal oxide(s) is limited to 2-20% is that, when the ratio by weight of the alkaline earth metal oxide(s) is less than 2%, a necessary smoothness, fine texture and brightness of glaze surface can not be achieved while, when it is more than 20%, devitrification, opacity, etc. of the glaze are apt to happen whereby fine texture and brightness of the glaze layer are significantly deteriorated.

ZnO is the component that improves the smoothness of the glaze and affects the gloss and the transparency. The reason why the ratio by weight of ZnO is limited to 2-15% is that, when the ratio by weight of ZnO is less than 2%, necessary smoothness, fine texture and brightness are not obtained while, when it is more than 15%, devitrification, opacity, etc. of the glaze happen whereby fine texture, smoothness and brightness of the surface are lost.

The alkaline metal oxide is the component that improves the fusibility of the glaze and affect the formation of transparent and glossy glaze layer. The reason why the ratio by weight of the alkaline metal oxide(s) is limited to 2-7% is that, when the ratio by weight of the alkaline metal oxide(s) is less than 2%, a smooth glaze layer is not achieved while, when it is more than 7%, the viscosity of the glaze becomes too low whereby deteriorated parts such as pits, pinholes and pigskin are apt to generate in the glaze layer.

B₂O₃ is the components affecting the fusibility of the glaze. The reason why the ratio by weight of B₂O₃ is limited to 0-5% is that, when it is more than 5%, the viscosity of the glaze significantly lowers whereby pits, pinholes and pigskin are apt to generate in the glaze layer.

Both TiO₂ and ZrO₂ are the components which improve the chemical durability of the glaze. The reason why the amount of either or both is limited to 0-4% is that, when the amount of either or both exceeds 4%, crystallization of the glaze is accelerated or the glaze turns yellow to yellowish brown whereby the appearance of the ceramic products is deteriorated.

MoO₃ is the component which affects the gloss and the fine texture of the glaze surface. The reason why the ratio by weight of MoO₃ is limited to 0-3% is that, when the ratio by weight of MoO₃ exceeds 3%, the glaze turns yellowish brown whereby the appearance of the ceramic products is deteriorated when it is used as a glaze.

Limitation of the melting temperature is very important in the present invention. Generally, the frit used in the ceramic glaze is melted at as high as 1400°C and, melting temperature rarely exceeds 1450°C, even if melted at higher than 1400°C.

However, in the method of manufacturing a frit according to the present invention, the material mixture is melted at 1450°C-1650°C. The reason for such a limitation will be explained as hereunder.

The objectives of the present invention are to manufacture a frit which can achieve a glaze layer having superior smoothness and fine texture and much brightness when used as a glaze as mentioned above. For such objectives, it is not recommended that the non-melted materials remain during the manufacture of the frit. If the non-melted materials remain in the frit, dissolving of the non-melted materials to the glaze is insufficient upon firing the ceramics whereby developing blisters on the surface or generating the bubbles during dissolving in the glaze whereupon a defective surface is resulted. In order to eliminate such a defective surface, it is necessary to melt the materials at such a high temperature that non-melted materials in the raw material do not remain in the manufacture of the frit. That is the reason why the temperature for melting the materials in the present invention is specified as high as 1450°C or higher. Incidentally, the reason why the upper limit of the temperature at 1650°C for melting the materials in the present invention is due to the physical limit of the resistance of the refractory bricks to heating.

In the present invention, limitation for the cooling(quenching) rate of the melted materials is important as well.

The cooling rate of the melted materials in the present invention is 600-1500°C/second. When the cooling rate is slower than 600°C/second, it is difficult to prepare fine powder in the succeeding grinding process and, in addition, oxidation of the metal of the surface of the water-cooling roll for cooling proceeds and, during the use for a long period, the above-mentioned oxide may dissolve in the molten frit or intrude to the frit surface causing various troubles when used as a glaze. In order to make the cooling rate 1500°C/second or faster, a method where a molten substance is poured into liquid nitrogen, a method where very big water-cooling rolls rotating at a high speed are used, etc. may be thinkable although such methods are impractical in view of industry or economy. Another method where cooling with roll and cooling with water are combined can be adopted. In this method, it is necessary to cool the melted substance down to 1000°C or lower, so as to prevent oxidation of the cooling rolls, frit's contamination and fluctuation of frit composition. Further with these cooled rolls and water quenching, it is recommended that the substance after roll-cooled shall be either dipping into water or water-sprayed.

It is recommended that the sulfur oxides in the frit are 1000 ppm or less in terms of SO₃. The reason is that sulfur oxides react with alkaline components in the ceramic body or in the glaze materials to form the compounds which are easily decomposed at high temperature such as barium sulfate and soda-gypsum and such decomposable compounds are decomposed during the firing of the glaze to generate the bubbles or to partially lower the surface tension of the glaze whereby generation of pits, pinholes, pigskin, etc. on the glaze surface is significantly induced. Incidentally, when the SO₃ concentration exceeds 1000 ppm, the viscosity of the glaze may likely become lower and have a defoaming effect. However, such an effect does not take place at all times and it can rather results in an unfavorable adverse effect that the unevenness of the surface becomes significant or the generation of pigskin and pinholes is accelerated.

In order to achieve the effect that the surface of ceramics is hardly stained and that, even if stained, it can be easily removed, it is important that the surface of ceramics has no fine defects such as pinholes and pigskin but has to be smooth and has excellent fine texture and brightness. Thus, in order not to generate such fine defects on the surface of ceramics even if sulfur oxides and moisture are present in an atmosphere of the firing furnace for ceramics, it is effective to suppress the sulfur oxide content in the frit composition at 1000 ppm or less after melted and cooled down.

The frit of the present invention is made into a glaze by addition of agents for preparing a glaze such as feldspar, quartz, whiting, clay (such as kaolin), zinc oxide, pigment, carboxymethyl cellulose, zirconium silicate, etc. ,if required. If coloration is necessary, a coloring agent can be added to the glaze. When the above-mentioned glaze is applied to ceramic product, the desired glazed ceramic product can be achieved.

### Description of the Preferred Embodiment

Embodiments of the present invention will now be illustrated by way of the Examples.

### Example 1.

Raw materials were mixed as shown in Table 1 and Table 2 in such a manner that the ratio by weight of SiO₂, Al₂O₃, alkaline earth metal oxides, ZnO, alkaline metal oxides, B₂O₃, TiO₂, ZrO₂ and MoO₃ was made as defined by the present invention. The mixture was melted under the melting condition as defined by the present invention and the resulting melted mixture was rapidly cooled(quenched) at the cooling rate as defined by the present invention whereby eight kinds of frit A-H were prepared.

For comparison, four kinds of frit I-L which were separate from the method of the present invention were prepared.

Analyzed composition, melting temperature, cooling rate and appearance of those 12 kinds of frit are as shown in Table 1 and Table 2.

Each of the frits was compounded with the glaze preparing agents as shown in Table 1 and Table 2 to prepare a glaze. To the glaze was added a predetermined amount of water and the mixture was ground using a ball mill to produce a slip. Among those slips, the ones except those prepared by using frit C and frit H (hereinafter called slip C and slip H) were applied on biscuit tile body which was underglazed and were fired under the condition of the highest temperature at 1160°C for 90 minutes of the firing time.

In the meanwhile, slip C and slip H were applied to a Japanese tableware body and fired for a firing schedule of 24 hours and the highest temperature at 1240°C.

### Test for evaluation of properties.

### 1) Fine texture of the surface of glaze layer

The state of the surface of the resulting glazed tile specimens and of glaze layer of the Japanese tableware was observed with a magnifier of a magnifying power of 30. Pigskin, pinholes and pits were respectively defined as small and shallow holes existing on the surface, small and deep holes existing on the surface and larger (than the above two) and shallow holes existing on the surface. Fine texture was evaluated according to the following criteria by counting the total numbers of pigskin, pinholes and pits.

### CRITERIA

Fine texture is good (o), when the total numbers are 20/10 cm² or less
Fine texture is normal (Δ), when the total numbers are 21-100/cm²
Fine texture is poor (×), when the total numbers are 101/cm² or more

### 2) Smoothness of the surface of glaze layer

A three-wavelength white fluorescent lamp of 27 watts was lighted, a specimen was placed immediately thereunder and the fluorescent was reflected onto the specimen whereby the evaluation for smoothness was evaluated according to the following criteria.

### CRITERIA

Smoothness is good (o), when the image of the fluorescent lamp is noted without waves
Smoothness is poor (×), when the image of the fluorescent lamp shows significant waves whereby outlines of the image is not clear
Smoothness is normal (Δ), when the status is between the above two

### 3) Transparency of the surface of the glaze layer

With regard to the transparency, degree of a tone of color of the body observed through the glaze layer was evaluated according to the following criteria.

### CRITERIA

Transparency is good (o), when the degree of the color tone of the body therethrough is high
Transparency is poor (×), when the degree of the color tone of the body therethrough is low
Transparency is normal (Δ), when the state is between the above two

### 4) Brightness of the surface of the glaze layer

With regard to the brightness, evaluation was carried out according to the following criteria in the same manner as the case of smoothness.

### CRITERIA

Brightness is good (o), when outlines of the fluorescent lamp image are clearly observed
Brightness is poor (×), when the outlines are considerably blurred and the fluorescent lamp image is noted as if a white mass
Brightness is normal (Δ), when the state is between the above two

### 5) Unevenness of the surface of the glaze layer

Unevenness was evaluated according to the following criteria depending upon the degree of unevenness on the glaze surface when the specimen was slanted and the glaze surface was observed.

### CRITERIA

Good (o): when the unevenness is not or hardly observed
Normal (Δ): when the unevenness is slightly observed
Poor (×): when much unevenness is observed

### 6) Degree of removal easiness of dirt from the surface of glaze layer

The degree of removal easiness of the dirt adhered on the surface of the glaze layer was evaluated according to the following criteria ,after marked on the surface using a commercially available solvent ink marker, and after 30 seconds then 3-5 water drops were dropped thereon, followed by wiping off the marking with a dry cloth.

### CRITERIA

Degree of removal easiness of dirt is good (o), when the marking is able to be removed very easily and the dirt does not remain at all
Degree of removal easiness of dirt is poor (×), when the marking is hardly removed or, even if removed, dirt remains thereafter
Degree of removal easiness of dirt is normal (Δ), when the state is between the above two

### 7) Total evaluation

Very good: ⓞ
Good: o
More or less improved as compared with the conventional products: Δ
No improvement noted as compared with the conventional products: ×

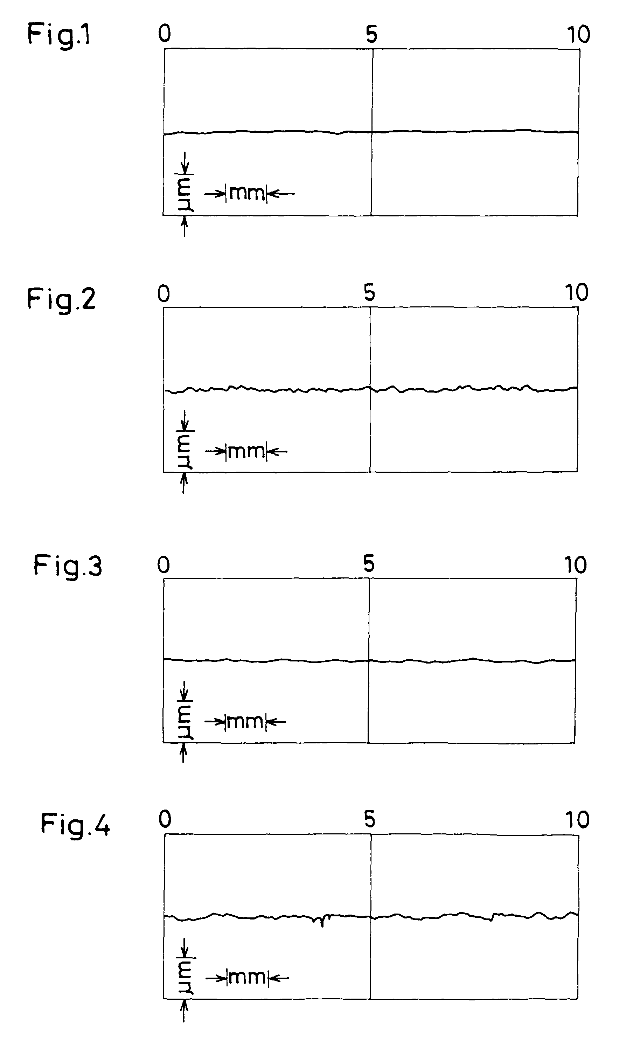

The roughness of the surface of the specimens of the tile using the frit E of the present invention was measured by a surface roughness tester ("Surfcorder SE-40D" manufactured by Kosaka Kenkyusho). Conditions for the measurement of the surface roughness were as follows. Feed rate: 0.1 mm/sec; standard length: 10.0 mm; cut-off value: 0.8 mm; longitudinal magnification: 2000; transverse magnification: 10. The result of the measurement is shown in Fig. 1. For comparison, the result of the measurement of the surface roughness of the specimen using frit L of Comparative Example is shown in Fig. 2.

From the comparison of both, it is noted that the smoothness of the surface of the specimen using the frit of the present invention is superior.

### Example 2.

As shown in Table 3 and Table 4, the materials were mixed in such a manner that the ratio by weight of SiO₂, Al₂O₃, alkaline earth metal oxides, ZnO, alkaline metal oxides, B₂O₃, TiO₂, ZrO₂ and MoO₃ was as defined by the present invention. The mixture was melted under the melting condition as defined by the present invention and the resulting melted mixture was rapidly cooled(quenched) at the cooling rate as defined by the present invention whereby eight kinds of frit M-T were prepared.

For comparison, four kinds of frit U-X which were separate from the method of the present invention were prepared as well.

Analyzed composition, melting temperature, cooling rate and appearance of those 12 kinds of frit are shown in Table 3 and Table 4.

Each of the frit was compounded with the glaze preparing agents as shown in Table 3 and Table 4 to prepare a glaze. To the glaze was added a predetermined amount of water and the mixture was ground using a ball mill to produce a slip. The slip was applied to the pieces of the cast molded raw body for sanitary ware and fired in a firing schedule of 18 hours under the condition of the highest temperature of 1180°C for 90 minutes of the retention time.

The resulting glazed specimen was evaluated according to the same items by the same methods as mentioned in Example 1.

Surface roughness of the specimen made of the frit R of the present invention was measured by the same method as in Example 1. The result of the measurement is shown in Fig. 3. For comparison, the result of the measurement of the surface roughness of the specimen made of the frit W of Comparative Example is shown in Fig. 4.

From comparison of both, it is noted that the smoothness of the surface of the specimen using the frit of the present invention is superior.

**Table 1**

| (% by weight) | | | | | | |
|---|---|---|---|---|---|---|
| | Examples | | | | | |
| Frit No. | A | B | C | D | E | F |
| Analytical Composition of Frit | | | | | | |
| SiO₂ | 60.9 | 64.2 | 70.2 | 55.1 | 63.2 | 68.9 |
| Al₂O₃ | 5.2 | 5.5 | 5.3 | 8.3 | 8.1 | 5.0 |
| MgO | 1.9 | 2.2 | 2.0 | 2.5 | 2.5 | 2.3 |
| CaO | 10.2 | 10.2 | 10.0 | 5.1 | 5.3 | 5.3 |
| SrO | - | - | - | 3.1 | 3.0 | 3.0 |
| Li₂O | 3.5 | 3.0 | 1.3 | 1.1 | - | - |
| BaO | 1.1 | 1.3 | 1.1 | - | - | 0.8 |
| Na₂O | 1.2 | 1.2 | 1.3 | 1.9 | 2.2 | 0.9 |
| K₂O | 4.1 | 3.8 | 4.0 | 5.1 | 3.0 | 4.9 |
| B₂O₃ | - | - | - | 3.4 | 3.3 | 3.7 |
| ZrO₂ | 1.1 | 1.1 | 1.2 | - | - | - |
| TiO₂ | 1 0 | 1.8 | 1.1 | | - | - |
| ZnO | 9.9 | 5.6 | 2.5 | 14.4 | 2.2 | 5.1 |
| MoO₃ | - | - | - | - | 1.0 | - |
| Total | 100.1 | 99.9 | 100.0 | 100.0 | 99.9 | 99.9 |
| SO₃(ppm) | 738 | 156 | 466 | 395 | 518 | 323 |
| Melting | 1500 | 1500 | 1600 | 1480 | 1540 | 1580 |
| Temperature | | | | | | |
| (°C) | | | | | | |
| Cooling Rate | 800 | 800 | 1000 | 1350 | 1000 | 900 |
| (°C/sec) | | | | | | |
| Appearance of Frit | Flakes | Fine Granules | Flakes | Granules | Flakes | Flakes |
| | Transparent | Transparent | Transparent | Transparent | Transparent | Transparent |

| Glaze Preparing Agents | | | | | | |
|---|---|---|---|---|---|---|
| Frit | 85 | 85 | 88 | 80 | 85 | 88 |
| Feldspar | 10 | 10 | 7 | 14 | 10 | 7 |
| Kaolin | 5 | 5 | 5 | 6 | 5 | 5 |
| (wt%) | | | | | | |
| Smoothness | ○ | ○ | Δ | ○ | ○ | ○ |
| Fine texture | ○ | ○ | ○ | ○ | ○ | Δ |
| Transparency | ○ | ○ | ○ | ○ | ○ | ○ |
| Brightness | Δ | ○ | ○ | ○ | ○ | Δ |
| Unevenness | ○ | ○ | ○ | ○ | ○ | ○ |
| Resistance to Staining | ○ | ○ | ○ | ○ | ○ | ○ |
| Total Evaluation | ○ | ⓞ | ○ | ⓞ | ⓞ | ○ |

**Table 2**

| (% by weight) | | | | | | |
|---|---|---|---|---|---|---|
| | Examples | | Comparative Examples | | | |
| Frit No. | G | H | I | J | K | L |
| Analytical Composition of Frit | | | | | | |
| SiO₂ | 60.8 | 61.1 | 52.1 | 59.6 | 64.0 | 64.8 |
| Al₂O₃ | 9.9 | 10.2 | 10.0 | 5.2 | 4.1 | 8.2 |
| MgO | - | - | 1.9 | 2.2 | 2.2 | 1.7 |
| CaO | 6.9 | 7.2 | 11.9 | 5.8 | 9.7 | 5.8 |
| SrO | - | - | 1.8 | | 1.8 | - |
| Li₂O | 2.1 | 2.2 | 3.1 | 3.2 | 3.2 | 1.8 |
| BaO | - | - | 1.0 | 0.8 | - | 2.1 |
| Na₂O | 1.9 | 1.1 | 1.3 | 0.9 | 0.8 | 2.2 |
| K₂O | 4.0 | 4.2 | 4.0 | 4.2 | 3.7 | 5.1 |
| B₂O₃ | 3.6 | 5.0 | 1.1 | 6.9 | - | 3.1 |
| ZrO₂ | 1.6 | 1.8 | 1.2 | 1.2 | 4.2 | - |
| TiO₂ | - | 1.0 | 0.9 | 1.0 | 1.9 | - |
| ZnO | 8.1 | 6.1 | 9.7 | 8.9 | 4.5 | 5.2 |
| MoO₃ | 1.0 | - | - | - | - | - |
| Total | 100.0 | 99.9 | 100.0 | 99.9 | 100.1 | 100.0 |
| SO₃(ppm) | 125 | 382 | 278 | 346 | 1595 | 1240 |
| Melting Temperature (°C) | 1520 | 1560 | 1400 | 1450 | 1500 | 1560 |
| Cooling Rate (°C/sec) | 700 | 700 | 1300 | 900 | 500 | 1000 |
| Appearance of Frit | Fine | Flakes | Bulks | Flakes | Thick | Flakes |
| | Particles | | | | Flakes | |
| | Transparent | Transparent | White/ opaque | Transparent | Transparent | Transparent |

| Glaze Preparing Agents | | | | | | |
|---|---|---|---|---|---|---|
| Frit | 85 | 85 | 80 | 85 | 85 | 85 |
| Feldspar | 10 | 10 | 14 | 10 | 10 | 10 |
| Kaolin | 5 | 5 | 6 | 5 | 5 | 5 |
| (wt%) | | | | | | |
| Smoothness | ○ | ○ | × | Δ | Δ | Δ |
| Fine texture | ○ | ○ | × | Δ | Δ | Δ |
| Transparency | ○ | ○ | × | Δ | ○ | ○ |
| Brightness | ○ | ○ | x | Δ | x | A |
| Unevenness | ○ | Δ | × | × | × | Δ |
| Resistance to Staining | ○ | ○ | × | × | × | Δ |
| Total Evaluation | ⓞ | ○ | × | Δ | × | Δ |

**Table 3**

| (% by weight) | | | | | | |
|---|---|---|---|---|---|---|
| | Examples | | | | | |
| Frit No. | M | N | O | P | Q | R |
| Analytical Composition of Frit | | | | | | |
| SiO₂ | 55.3 | 60.4 | 65.1 | 64.8 | 64.9 | 69.6 |
| Al₂O₃ | 9.5 | 10.0 | 10.2 | 10.3 | 9.7 | 7.9 |
| MgO | - | 2.2 | 2.1 | - | - | - |
| CaO | 12.0 | 6.5 | 9.8 | 5.1 | 5.0 | 5.3 |
| SrO | 2.8 | 2.9 | - | 2.8 | 3.5 | 2.4 |
| Li₂O | 0.7 | 1.3 | 1.2 | - | - | 0.9 |
| Na₂O | 2.7 | 1.7 | 0.9 | 2.2 | 1.9 | 1.7 |
| K₂O | - | 3.8 | 3.6 | 4.4 | 4.9 | 3.9 |
| B₂O₃ | - | - | - | 3.5 | 3.1 | - |
| ZrO₂ | 0.9 | 1.1 | 1.1 | - | - | - |
| TiO₂ | - | - | - | - | - | - |
| ZnO | 14.9 | 10.5 | 5.8 | 6.9 | 5.9 | 8.2 |
| MoO₃ | 1.0 | - | - | - | 1.1 | - |
| Total | 99.9 | 99.9 | 99.9 | 100.1 | 100.0 | 99.9 |
| SO₃(ppm) | 97 | 255 | 825 | 297 | 497 | 529 |
| Melting Temperature (°C) | 1480 | 1520 | 1600 | 1610 | 1610 | 1610 |
| Cooling Rate (°C/sec) | 650 | 700 | 900 | 800 | 800 | 800 |
| Appearance of Frit | Fine Particles | Flakes | Flakes | Flakes | Fine Particles | Flakes |
| | Transparent | Transparent | Transparent | Transparent | Transparent | Transparent |

| Glaze Preparing Agents | | | | | | |
|---|---|---|---|---|---|---|
| Frit | 65 | 75 | 75 | 75 | 75 | 80 |
| Feldspar | 23 | 10 | 10 | 10 | 10 | 5 |
| Quartz | 5 | 5 | 5 | 5 | 5 | 5 |
| Whiting | 2 | 4 | 4 | 4 | 4 | 4 |
| Zn-oxide | - | 1 | 1 | 1 | 1 | 1 |
| Kaolin (wt%) | 5 | 5 | 5 | 6 | 5 | 5 |
| Smoothness | ○ | ○ | Δ | ○ | ○ | ○ |
| Fine texture | ○ | ○ | ○ | ○ | ○ | ○ |
| Transparency | Δ | ○ | ○ | ○ | ○ | ○ |
| Brightness | ○ | ○ | ○ | ○ | ○ | Δ |
| Unevenness | ○ | ○ | ○ | ○ | ○ | ○ |
| Resistance to Staining | ○ | ○ | ○ | ○ | ○ | ○ |
| Total Evaluation | ○ | ⓞ | ○ | ⓞ | ⓞ | ○ |

**Table 4**

| (% by weight) | | | | | | |
|---|---|---|---|---|---|---|
| | Examples | | Comparative Examples | | | |
| Frit No. | S | T | U | V | W | X |
| Analytical Composition of Frit | | | | | | |
| SiO₂ | 70.1 | 69.7 | 60.1 | 65.2 | 54.6 | 75.2 |
| Al₂O₃ | 7.6 | 7.7 | 10.0 | 10.0 | 10.2 | 11.4 |
| MgO | - | - | 1.9 | 2.6 | 2.2 | 1.7 |
| CaO | 8.1 | 8.0 | 9.9 | 8.9 | 9.9 | 4.8 |
| SrO | 1.9 | - | 2.8 | 1.6 | - | - |
| Li₂O | 1.1 | - | 2.1 | 0.7 | - | 1.5 |
| Na₂O | 1.5 | 0.9 | 2.0 | - | 2.4 | 3.8 |
| K₂O | 2.3 | 3.6 | 4.0 | 3.6 | 2.8 | 1.7 |
| B₂O₃ | 0.9 | 3.2 | - | 7.4 | - | - |
| ZrO₂ | - | 2.2 | 1.0 | - | - | - |
| TiO₂ | 1.3 | 0.9 | 1.2 | - | - | - |
| ZnO | 4.2 | 3.7 | 4.9 | - | 17.9 | - |
| MoO₃ | 0.9 | - | - | - | - | - |
| Total | 99.9 | 99.9 | 99.9 | 100.0 | 100.0 | 100.1 |
| SO₃(ppm) | 296 | 48 | 849 | 374 | 1278 | 1156 |
| Melting Temperature (°C) | 1620 | 1620 | 1400 | 1580 | 1480 | 1610 |
| Cooling Rate (°C/sec) | 1000 | 1450 | 800 | 1000 | 500 | 1450 |
| Appearance of Frit | Flakes | Bulks | Flakes | Flakes | Thick Flakes | Blocks |
| | Transparent | Transparent | White/opaq | Transparent | Transparent | Transparent |
| | | | ue | | | |

| Glaze Preparing Agents | | | | | | |
|---|---|---|---|---|---|---|
| Frit | 80 | 80 | 75 | 75 | 65 | 80 |
| Feldspar | 5 | 5 | 10 | 10 | 23 | 5 |
| Quartz | 5 | 5 | 5 | 5 | 5 | 5 |
| Whiting | 4 | 4 | 4 | 4 | 2 | 4 |
| Zn-oxide | 1 | 1 | - | 1 | - | 1 |
| Kaolin (wt%) | 5 | 5 | 6 | 5 | 5 | 5 |
| Smoothness | ○ | ○ | × | Δ | Δ | Δ |
| Fine texture | ○ | ○ | × | Δ | Δ | ○ |
| Transparency | ○ | ○ | × | Δ | Δ | Δ |
| Brightness | ○ | ○ | x | ○ | × | Δ |
| Unevenness | Δ | ○ | × | × | ○ | Δ |
| Resistance to Staining | ○ | ○ | × | × | × | Δ |
| Total Evaluation | ○ | ⓞ | × | Δ | Δ | Δ |

As apparent from the Examples, the glazed ceramic products using the glaze containing the frit prepared by the present invention are excellent in smoothness, fine texture, transparency and brightness in comparison with the conventional glazed ceramic surfaces and have significantly better resistance to dirt being hardly stained and, even if stained, the dirt can be easily washed off.

## Claims

1. A method of the manufacturing a frit for ceramic glaze, characterized in that materials are mixed so as to make SiO₂ 55% or more, Al₂O₃ 5% or more (in which the total amount of SiO₂ and Al₂O₃ being made 60-85%), alkaline earth metal oxide(s) 2-20%, ZnO 2-15%, alkaline metal oxide(s) 2-7%, B₂O₃ 0-5%, TiO₂ and/or ZrO₂ 0-4% and MoO₃ 0-3% in terms of the ratio by weight of the oxides, then the resulting mixture is melted at 1450-1650°C and the molten substance is quickly cooled at a cooling rate of 600-1500°C/second.

2. The method of manufacturing a frit for ceramic glaze according to claim 1, wherein a quick cooling of the molten substance is carried out by cooling the molten substance with a water-cooling roll down to an extent of 1000°C or lower and then by spraying water thereto or by dipping it into water.

3. The method of manufacturing a frit for ceramic glaze according to claim 1 or 2, wherein the sulfur content in terms of SO₃ in the resulting frit is 1000 ppm or less.

4. A frit for ceramic glaze which is prepared by the method mentioned in any of claims 1-3.

5. A method of manufacturing glazed ceramics, characterized in that a glaze containing the frit mentioned in claim 4 as a base is applied to ceramics.

6. A glazed ceramics prepared by the method mentioned in claim 5.
